# EUROPÄISCHE PATENTSCHRIFT

(11) **EP 2 460 985 B1**
(45) Veröffentlichungstag und Bekanntmachung des Hinweises auf die Patenterteilung: **17.05.2017**
(21) Anmeldenummer: 11192174.8
(22) Anmeldetag: 06.12.2011
(51) Int. Cl.: F01N 3/021, F01N 3/022, F01N 3/28

(54) **Filtereinheit zur Abgasnachbehandlung von Brennkraftmaschinen**
Filter unit for exhaust gas post treatment of combustion engines
Unité de filtre pour le post-traitement de gaz d'échappement de moteurs à combustion interne

(30) Priorität: 06.12.2010 DE 102010053452
(43) Veröffentlichungstag der Anmeldung: 06.06.2012
(73) Patentinhaber: Mann + Hummel GmbH, 71638 Ludwigsburg (DE)
(72) Erfinder: Luley, Oliver, 67346 Speyer (DE); Hensel, Volker, 69117 Heidelberg (DE); Hofmeister, Marcel, 74391 Erligheim (DE)

(56) Entgegenhaltungen:
- EP-A1- 1 484 481
- EP-A1- 2 351 917
- WO-A1-2010/047199
- DE-A1- 2 934 143
- JP-A- 8 100 643

## Beschreibung

### Technisches Gebiet

Die Erfindung betrifft eine Filtereinheit zur Abgasnachbehandlung von Brennkraftmaschinen, insbesondere zur (Ruß-)Partikelfilterung von Abgasen einer Brennkraftmaschine, umfassend ein insbesondere monolithisches Keramik-Filterelement, eine Abgasnachbehandlungseinrichtung mit einer solchen Filtereinheit, sowie ein zugehöriges Verfahren zur Abgasnachbehandlung.

### Stand der Technik

Aus der DE 10 2008 005 752 A1 ist ein Abgaskatalysator in Rohrbauweise mit einem Rohrabschnitt als Gehäuse für einen Katalysatorkörper bekannt geworden. Der Katalysatorkörper ist mit einer Lagermatte umwickelt und wird gemeinsam mit dieser in den das Gehäuse bildenden Rohrabschnitt eingeschoben und hierbei fest mit dem Rohrabschnitt verbunden (so genanntes "canning"). Um das Einschieben zu erleichtern, weist der Rohrabschnitt stirnseitig in Einschubrichtung des Katalysatorkörpers eine Schräge auf, so dass sich ein in Einschubrichtung verjüngender Abschnitt des Gehäuses ergibt. Ein einmal in das Gehäuse eingeschobener keramischer Katalysatorkörper kann nicht wieder ohne Beschädigung aus dem das Gehäuse bildenden Rohrabschnitt entnommen werden. Auch aus DE2934143A1 ist ein Abgaskatalysator bekannt. Der Erfindung liegt die Aufgabe zugrunde, eine Filtereinheit zur Abgasnachbehandlung, eine Abgasnachbehandlungseinrichtung sowie ein zugehöriges Verfahren zur Abgasnachbehandlung bereitzustellen, bei der die Lagerung in einem Gehäuse vereinfacht ist.

### Offenbarung der Erfindung

Diese Aufgabe wird durch eine Filtereinheit der eingangs genannten Art gelöst, die ein Gehäuse aufweist, in welches das Keramik-Filterelement eingebracht ist, wobei die Filtereinheit als Wechselfiltereinheit zum Einsetzen in eine Abgasleitung und zur Entnahme aus der Abgasleitung ausgebildet ist.
Erfindungsgemäß wird vorgeschlagen, eine Wechselfiltereinheit bereitzustellen, d.h. das Keramik-Filterelement in einem Gehäuse unterzubringen, welches in eine Abgasleitung eingesetzt wird. Das Keramik-Filterelement wird hierbei typischer Weise in dem Wechselfilter-Gehäuse "gecannt" und nicht wie oben beschrieben in einer Abgasleitung bzw. in einem Abgasrohr. Zwei Abschnitte der Abgasleitung können hierbei in dem Bereich, in dem die Filtereinheit eingesetzt wird, lösbar miteinander verbunden sein. Hierdurch kann ein kostenintensives Austauschen der Filtereinheit vermieden werden, bei dem der Teil der Abgasleitung vollständig ausgebaut werden muss, in dem die Filtereinheit verbaut ist.

Bei einer bevorzugten Ausführungsform weist das Gehäuse eine Fixiereinheit, insbesondere einen Kragen, zur Fixierung der Filtereinheit zwischen einem eintrittsseitigen und einem austrittsseitigen Rohrabschnitt der Abgasleitung auf. Somit kann das Gehäuse einfach an der Abgasleitung befestigt werden. Beim Einschieben des Filterelementes in den als Gehäusetopf dienenden Rohrabschnitt kann der Kragen als Anschlag zur Begrenzung des Einschubweges dienen.

Besonders bevorzugt ist eine Ausführungsform, die dadurch gekennzeichnet ist, dass an dem Gehäuse, insbesondere an dem Kragen, mindestens eine Axialdichtung angebracht ist. Die Axialdichtung dichtet die Reinseite von der Rohseite des Filterelements ab. Der Kragen stellt für eine Axialdichtung geeignete Dichtflächen bereit. Es sind aber auch andere Dichtungsanordnungen zum Trennen von Rein- und Rohseite des Filterelementes möglich. Beispielsweise kann ggf. auch eine Radialdichtung auf der Mantelfläche des Gehäuses vorgesehen sein, die an der Innenwand der Abgasleitung zur Anlage kommt.

Eine weitere Ausführungsform ist dadurch gekennzeichnet, dass das Gehäuse umfangsseitig Zentrierelemente zur Zentrierung des Gehäuses in der Abgasleitung aufweist. So kann die Filtereinheit optimal im Abgasstrom positioniert werden. Darüber hinaus kann durch eine Zentrierung der Filtereinheit in der Abgasleitung ein korrekter Sitz der Axialdichtung gewährleistet werden.

Besonders bevorzugt ist eine Weiterbildung der eben beschriebenen Ausführungsform, bei der die Zentrierelemente als Federelemente ausgebildet sind. Aufgrund ihrer Elastizität können die Federelemente eine Dämpfung von Vibrationen des Abgasrohrs bewirken, so dass sich die Vibrationen nur geschwächt auf das Keramik-Filterelement übertragen.

Bei einer Ausführungsform weist das Gehäuse endseitig Anschläge zur Anlage des Filterelements in axialer Richtung auf. Wird das Filterelement in das Gehäuse eingeschoben, begrenzen die Anschläge den Einschubweg des Filterelementes in axialer Richtung. Die Anschläge können beispielsweise in Abgasströmungsrichtung gesehen am hinteren Ende des Gehäuses angeordnet werden. Somit wird während des Betriebs ein Verrutschen des Filterelementes im Gehäuse bei der Anströmung in Strömungsrichtung verhindert.

Besonders bevorzugt ist eine Ausführungsform, die dadurch gekennzeichnet ist, dass umfangsseitig zwischen dem Gehäuse und dem Keramik-Filterelement eine Lagermatte angebracht ist. Die Lagermatte garantiert einen festen Sitz in dem Gehäuse und bewirkt eine gleichmäßige Flächenpressung zwischen Gehäuse und Filterelement.

In den Rahmen der Erfindung fällt des Weiteren eine Abgasnachbehandlungseinrichtung für Brennkraftmaschinen, umfassend: eine Filtereinheit wie oben beschrieben sowie eine Abgasleitung, in welche die Filtereinheit eingebracht ist, wobei die Abgasleitung einen eintrittsseitigen Rohrabschnitt und einen austrittsseitigen Rohrabschnitt aufweist, die über eine lösbare Verbindung miteinander verbunden sind. Eine Entnahme der Filtereinheit aus der Abgasleitung erfolgt, indem der eintrittsseitige Rohrabschnitt und der austrittsseitige Rohrabschnitt voneinander getrennt werden. Dies geschieht durch Lösen von Verbindungsmitteln, beispielsweise Schrauben oder dergleichen, mit denen die beiden Rohrabschnitte miteinander verbunden sind.

Bei einer Weiterbildung der Abgasnachbehandlungseinrichtung weisen der eintrittsseitige Rohrabschnitt und der austrittsseitige Rohrabschnitt endseitig Flansche auf, die lösbar (z.B. mit Hilfe von Schrauben) miteinander verbunden sind. Die Flansche bilden Anlageflächen, um beide Rohrabschnitte bei der Verbindung relativ zueinander korrekt auszurichten. Darüber hinaus bilden die Flansche geeignete Anlageflächen für eine z.B. an einem Kragen angebrachte Axialdichtung der Filtereinheit.

Bevorzugt ist eine Weiterbildung der oben beschriebenen Abgasnachbehandlungseinrichtung, die dadurch gekennzeichnet ist, dass der eintrittsseitige Rohrabschnitt oder der austrittsseitige Rohrabschnitt einen Filtertopf bilden, in den die Filtereinheit in axialer Richtung eingebracht ist. Es ist vorteilhaft, den Filtertopf in einen der beiden Rohrabschnitte zu integrieren und mit einer Öffnung in axialer Richtung zu versehen. Der andere Rohrabschnitt bildet in vorteilhafter Weise den Verschluss der axialen Öffnung des Filtertopfes. So wird die Filtereinheit beim Einbringen in den als Filtertopf dienenden Rohrabschnitts vollständig durch diesen gehalten. Der andere Rohrabschnitt kann dann in einfacher Weise mit dem den Filtertopf bildenden Rohrabschnitt verbunden werden. Hierbei kann ein endseitig an dem Gehäuse vorgesehener Kragen zwischen den beiden Rohrabschnitten eingeklemmt werden. Dies erleichtert die Montage der Filtereinheit und vermeidet Beschädigungen.

In den Rahmen der Erfindung fällt des Weiteren ein Verfahren zur Abgasnachbehandlung von Brennkraftmaschinen, insbesondere mittels der oben beschriebenen Abgasnachbehandlungseinrichtung umfassend: Filtern von Abgasen in einem Keramik-Filterelement einer Filtereinheit, welche in einer Abgasleitung angeordnet ist, sowie Entnehmen der Filtereinheit bei verbrauchtem Keramik-Filterelement durch Lösen einer Verbindung zwischen einem eintrittsseitigen und einem austrittsseitigen Rohrabschnitt der Abgasleitung. Die Verbindung kann beispielsweise durch Verbindungsmittel wie Schrauben oder Klemmen hergestellt sein. Ein schnelles und kostengünstiges Austauschen der Filtereinheit ist somit möglich. Eine Erneuerung von Teilen der Abgasleitung ist nicht erforderlich.

Bei einer Weiterbildung des eben beschriebenen Verfahrens zur Abgasnachbehandlung von Brennkraftmaschinen wird die Filtereinheit mit dem verbrauchten Keramik-Filterelement in axialer Richtung aus der Abgasleitung entnommen und eine Filtereinheit mit einem unverbrauchten Keramik-Filterelement oder die Filtereinheit mit regeneriertem Filterelement in axialer Richtung in die Abgasleitung eingeschoben. Der Austausch des verbrauchten Keramik-Filterelementes kann wahlweise mit einem neuen unverbrauchten Keramik-Filterelement oder mit einem regenerierten Filterelement erfolgen. Wechsel des Filterelements kann notwendig werden, weil die Rußspeicherkapazität erreicht ist oder auch wenn aufgrund Einsatz eines Additivs im Kraftstoff die Kanäle mit Asche gefüllt sind bzw. durch die Aschefüllung der Druckverlust zu stark angestiegen ist. Aschebildung erfolgt durch die gewünschte Verbrennung des Additivs. Beispielsweise ist es möglich, die Regeneration eines verbrauchten Keramik-Filterelementes durch Ausbrennen des verbrauchten Keramik-Filterelementes mittels eines stationären Ausbrennofens durchzuführen.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Kurze Beschreibung der Zeichnungen

Ausführungsbeispiele sind in der schematischen Zeichnung dargestellt und werden in der nachfolgenden Beschreibung erläutert. Es zeigen:
- Fig. 1: eine Abgasnachbehandlungseinrichtung in dreidimensionaler Ansicht,
- Fig. 2: eine Explosionszeichnung der Abgasnachbehandlungseinrichtung,
- Fig. 3: die Abgasnachbehandlungseinrichtung in einer Schnittdarstellung, sowie
- Fig. 4: eine Detailansicht des markierten Bereichs A der Abgasnachbehandlungseinrichtung in Fig. 3 in einer Schnittdarstellung.

### Ausführungsform(en) der Erfindung

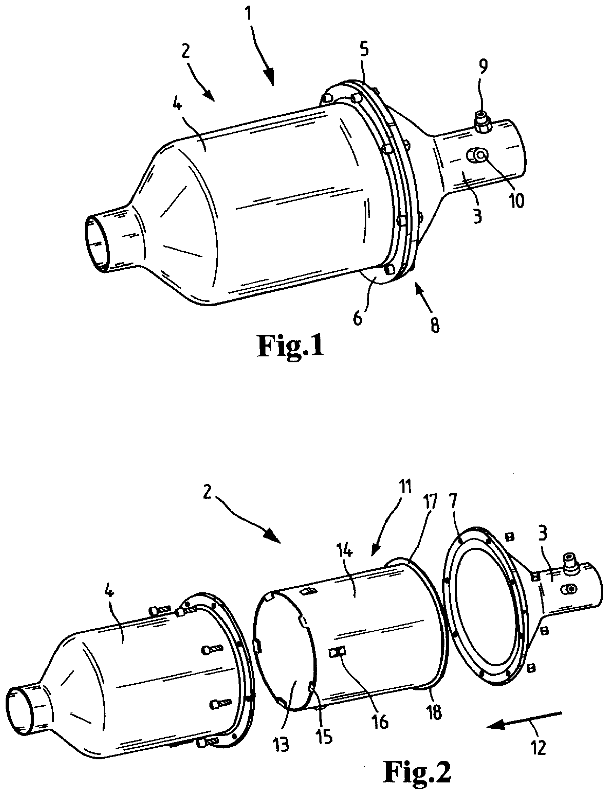

Fig. 1 zeigt eine Abgasnachbehandlungseinrichtung 1 mit einer Abgasleitung 2, die einen eintrittsseitigen Rohrabschnitt 3 und einen austrittsseitigen Rohrabschnitt 4 umfasst. Das zu reinigende Abgas tritt an dem eintrittsseitigen Rohrabschnitt 3 in die Abgasnachbehandlungseinrichtung 1 ein und an dem austrittsseitigem Rohrabschnitt 4 gereinigt wieder aus. Beide Rohrabschnitte 3, 4 weisen jeweils endseitig einen Flansch 5, 6 auf, an denen Bohrlöcher 7 (Fig. 2) vorgesehen sind. Beide Rohrabschnitte 3, 4 sind über eine lösbare Verbindung in Form von Schraube-Mutter-Verbindungen 8 miteinander verbunden. Die Schraube-Mutter-Verbindungen 8 verlaufen durch die Bohrlöcher 7. Es versteht sich, dass für die lösbare Verbindung gegebenenfalls auch andere Verbindungsmittel wie beispielsweise Klemmen verwendet werden können.

Wie in Fig. 1 ebenfalls zu erkennen ist, weist der eintrittsseitige Rohrabschnitt 3 einen Druckanschluss 9 zum Messen des rohseitigen Abgasdruckes und einen Temperaturanschluss 10 zum Messen der rohseitigen Abgastemperatur auf.

Gemäß Fig. 2 bildet der austrittsseitige Rohrabschnitt 4 einen Filtertopf, in den eine Filtereinheit 11 axial eingeschoben wird (Richtungspfeil 12). Die Einschubrichtung 12 entspricht hierbei der Flussrichtung des Abgasstroms. Ein Verschließen des Filtertopfes erfolgt durch Verbinden des austrittsseitigen Rohrabschnitts 4 mit dem eintrittsseitigen Rohrabschnitt 3, welcher als Deckel dient.

Die Filtereinheit 11 weist ein monolithisches Keramik-Filterelement 13 auf, das in ein Gehäuse 14 aus Blech eingeschoben ist und an Anschlägen 15 anliegt, die im vorliegenden Beispiel durch umgebogene (gebördelte) endseitige Randabschnitte des Gehäuses 14 gebildet sind. Alternativ können die Anschläge 15 auch auf andere Weise, z.B. mittels einer Schweißverbindung, an dem Gehäuse 14 angebracht werden. Das Keramik-Filterelement kann z.B. aus Cordierit, Siliziumcarbid oder Aluminium-Titanat (ggf. mit einer Metallbeschichtung) bestehen und als Rußpartikelfilter bzw. als Katalysator dienen. Andere Ausführungsformen ohne Anschlag 15 sind ebenfalls möglich.

An dem Gehäuse 14 sind umfangsseitig als Federelemente 16 ausgebildete Zentrierelemente vorgesehen, die die Filtereinheit 11 in dem austrittsseitigen Rohrabschnitt 4 zentrieren. Das Gehäuse weist weiter eine als Kragen 17 ausgebildete Fixiereinheit auf, an dem beidseitig Axialdichtungen 18 angebracht sind. Es ist auch möglich, nur eine Axialdichtung 18 an dem Kragen 17 vorzusehen. Der Kragen 17 ist im vorliegenden Fall durch Umbördelung hergestellt, kann aber auch auf andere Weise, z.B. durch eine Schweißverbindung, gasdicht an dem Gehäuse 14 angebracht werden.

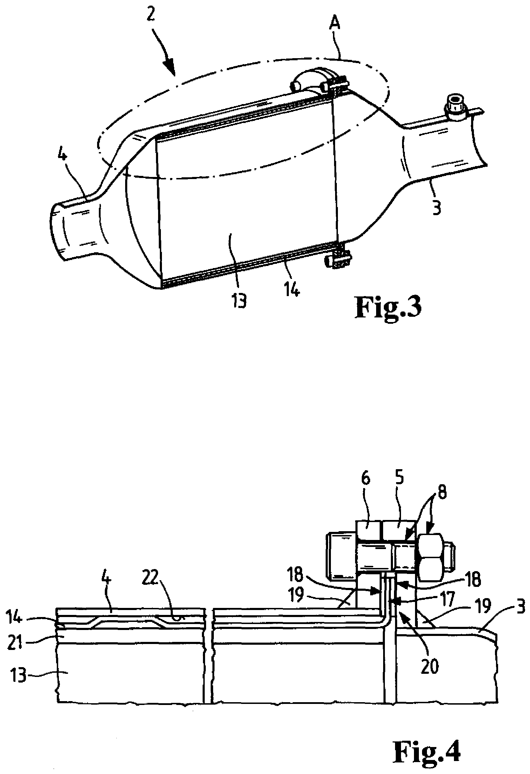

Fig. 3 zeigt die Abgasnachbehandlungseinrichtung 1 in einer Schnittdarstellung. Dabei ist das Keramik-Filterelement 13 zu erkennen, das sich über nahezu den gesamten Querschnitt der Abgasleitung 2 erstreckt. Das Filterelement 13 ist vollständig in den austrittsseitigen Rohrabschnitt 4 eingeschoben und im zylindrisch ausgebildeten Teil desselben angeordnet.

In Fig. 4 ist eine Detailansicht des in Fig. 3 gekennzeichneten Bereichs A dargestellt. Wie dort zu erkennen ist, weist die Abgasnachbehandlungseinrichtung 1 Schweißnähte 19 auf, mittels derer die Flansche 5, 6 mit dem eintrittsseitigen Rohrabschnitt 3 bzw. dem austrittsseitigen Rohrabschnitt 4 verbunden sind. Zwischen dem Flansch 6 des austrittsseitigen Rohrabschnitts 4 und dem Flansch 5 des eintrittsseitigen Rohrabschnitts 3 ist eine Aussparung 20 gebildet, in welcher der Kragen 17 mit den Axialdichtungen 18 angeordnet ist. Die Axialdichtungen 18 kommen mit den Flanschen 5,6 zur Anlage und werden durch die Schraube-Mutter-Verbindung 8 gegen diese angepresst, so dass die Axialdichtungen 18 die Reinseite gegenüber der Rohseite des Filterelementes 13 abdichten. Der Kragen 17 ist Teil des Gehäuses 14 und mithilfe von Umformverfahren aus diesem gebildet. Der Kragen 17 kann auch durch Schweißverbindung angebracht sein.

Im Inneren des Gehäuses 14 ist das Filterelement 13 angeordnet, das von einer Lagermatte 21 umwickelt ist. Die Federelemente 16 des Gehäuses 14 sind durch Umformen desselben (Stanzen und Umbiegen) ausgebildet und liegen an einer Innenseite 22 des austrittsseitigen Rohrabschnittes 4 an. Die Federelemente 16 sind hierbei so ausgebildet, das diese einerseits eine vibrations- und schwingungsfeste Lagerung des Gehäuses 14 in radialer Richtung ermöglichen und andererseits die Filtereinheit 11 ohne größeren Kraftaufwand in axialer Richtung in den Rohrabschnitt 4 eingeschoben und aus diesem entnommen werden kann. Es versteht sich, dass die Federelemente auch auf andere Weise an dem Gehäuse 14 angebracht werden können, z.B. über eine Schweißverbindung.

Es ist auch möglich, die Abgasnachbehandlungseinrichtung 1 mit umgekehrter Strömungsrichtung des Abgasstroms zu betreiben. In diesem Fall sind die Rollen von eintrittsseitigem Rohrabschnitt 3 und austrittsseitigem Rohrabschnitt 4 vertauscht.

Die beschriebene Abgasnachbehandlungseinrichtung 1 kann auch genutzt werden, um ein Verfahren zur Abgasnachbehandlung von Brennkraftmaschinen durchzuführen.

Im Rahmen dieses Verfahrens werden in einem ersten Schritt mithilfe des oben beschriebenen monolithischen Keramik-Filterelementes 13 Rußpartikel aus den Abgasen einer Brennkraftmaschine, z.B. eines Kraftfahrzeugs, eines Pkws oder eines Flurförderfahrzeugs, gefiltert. Die Brennkraftmaschine kann hierbei als Diesel-Motor, ggf. aber auch als Otto-Motor ausgelegt sein.

Ist das Filterelement 13 verbraucht, z.B. weil seine Rußpartikel-Speicherkapazität überschritten ist oder durch Additivverbrennung durch Asche der Druckverlust ansteigt,wird es aus der Abgasleitung 2 entnommen. Hierzu wird in einem zweiten Verfahrensschritt die Schrauben-Mutter-Verbindung 8 zwischen dem eintrittsseitigen Rohrabschnitt 3 und dem austrittsseitigen Rohrabschnitt 4 gelöst und beide Rohrabschnitte 3, 4 voneinander getrennt.

In einem dritten Verfahrensschritt wird die Filtereinheit 11 mit dem Filterelement 13 aus der Abgasleitung 2 entnommen. Dies erfolgt, indem die Filtereinheit 14 beispielsweise an dem Kragen 17 gegriffen und axial (entgegen des Richtungspfeils 12) aus der Abgasleitung 2 herausgezogen wird.

In einem vierten Verfahrensschritt wird ein unverbrauchtes oder ein regeneriertes Filterelement 13 (mit Gehäuse 14) wieder in die Abgasleitung 2 eingesetzt. Hierzu wird eine Filtereinheit 11 mit einem unverbrauchten oder regenerierten Filterelement 13 in den als Filtertopf dienenden austrittsseitigen Rohrabschnitt 4 geschoben. Der eintrittsseitige Rohrabschnitt 3 wird mit dem austrittsseitigen Rohrabschnitt 4 verbunden und die Schrauben-Mutter-Verbindung 8 festgezogen. Eine Regenerierung des verbrauchten Filterelementes 13 kann beispielsweise in einem stationären Ausbrennofen erfolgen.

Alternativ kann das verbrauchte Filterelement 13 aus dem Gehäuse 14 entnommen und einem Recyclingkreislauf zugeführt werden. Hierbei können die einzelnen Materialien sortenrein recycelt werden und ggf. kann eine an dem monolithischen Keramik-Filterelement 13 vorgesehene Edelmetall-Beschichtung zurück gewonnen werden.

## Patentansprüche

1. Filtereinheit (11) zur Abgasnachbehandlung von Brennkraftmaschinen, insbesondere zur Partikelfilterung von Abgasen einer Brennkraftmaschine, umfassend ein insbesondere monolithisches Keramik-Filterelement (13), wobei die Filtereinheit (11) ein Gehäuse (14) aufweist, in welches das Keramik-Filterelement (13) eingebracht ist, und dass die Filtereinheit (11) als Wechselfiltereinheit zum Einsetzen in eine Abgasleitung (2) und zur Entnahme aus der Abgasleitung (2) ausgebildet ist **dadurch gekennzeichnet, dass** das Gehäuse (14) umfangsseitig Zentrierelemente (16) zur Zentrierung des Gehäuses (14) in der Abgasleitung (2) aufweist, die als Federelemente (16) ausgebildet sind.

2. Filtereinheit nach Anspruch 1, **dadurch gekennzeichnet, dass** das Gehäuse (14) eine Fixiereinheit, insbesondere einen Kragen (17), zur Fixierung der Filtereinheit (11) zwischen einem eintrittsseitigen und einem austrittsseitigen Rohrabschnitt (3, 4) der Abgasleitung (2) aufweist.

3. Filtereinheit nach Anspruch 1 oder 2, **dadurch gekennzeichnet, dass** an dem Gehäuse (14), insbesondere an dem Kragen (17), mindestens eine Axialdichtung (18) angebracht ist.

4. Filtereinheit nach einem der vorhergehenden Ansprüche, **dadurch gekennzeichnet, dass** das Gehäuse (14) endseitig Anschläge (15) zur Anlage des Filterelements (13) in axialer Richtung (12) aufweist.

5. Filtereinheit nach einem der vorhergehenden Ansprüche, **dadurch gekennzeichnet, dass** umfangsseitig zwischen dem Gehäuse (14) und dem Keramik-Filterelement (13) eine Lagermatte (21) angebracht ist.

6. Abgasnachbehandlungseinrichtung (1) für Brennkraftmaschinen, umfassend: eine Filtereinheit (11) nach einem der vorhergehenden Ansprüche, sowie einen Abgasleitung (2), in welche die Filtereinheit (13) eingebracht ist, wobei die Abgasleitung (2) einen eintrittsseitigen Rohrabschnitt (3) und einen austrittsseitigen Rohrabschnitt (4) aufweist, die über eine lösbare Verbindung (8) miteinander verbunden sind.

7. Abgasnachbehandlungseinrichtung nach Anspruch 6, **dadurch gekennzeichnet, dass** der eintrittsseitige Rohrabschnitt (3) und der austrittsseitige Rohrabschnitt (4) endseitig Flansche (5, 6) aufweisen, die lösbar miteinander verbunden sind.

8. Abgasnachbehandlungseinrichtung nach einem der Ansprüche 6 oder 7, **dadurch gekennzeichnet, dass** der eintrittsseitige Rohrabschnitt (3) oder der austrittsseitige Rohrabschnitt (4) einen Filtertopf bilden, in den die Filtereinheit (11) in axialer Richtung eingebracht ist.

9. Verfahren zur Abgasnachbehandlung von Brennkraftmaschinen, mittels einer Abgasnachbehandlungseinrichtung (1) nach einem der Ansprüche 6 bis 8, umfassend:
Filtern von Abgasen in einem Keramik-Filterelement (13) einer Filtereinheit (11), welche in einer Abgasleitung (2) angeordnet ist,
sowie Entnehmen der Filtereinheit (11) bei verbrauchtem Keramik-Filterelement (13) durch Lösen einer Verbindung zwischen einem eintrittsseitigen und einem austrittsseitigen Rohrabschnitt (3, 4) der Abgasleitung (2).

10. Verfahren nach Anspruch 9, bei dem die Filtereinheit (11) mit dem verbrauchten Keramik-Filterelement (13) in axialer Richtung aus der Abgasleitung (2) entnommen und eine Filtereinheit (11) mit einem unverbrauchten Keramik-Filterelement (13) oder die Filtereinheit mit regeneriertem Filterelement (13) in axialer Richtung (12) in die Abgasleitung (2) eingeschoben wird.

## Claims

1. Filter assembly (11) for exhaust gas after treatment of internal combustion engines, in particular for filtering particles from exhaust gases of an internal combustion engine, comprising a ceramic filter element (13) in particular monolithic, wherein the filter assembly (11) features a housing (14) into which the ceramic filter element (13) is introduced, and that the filter assembly (11) is designed as spin-on filter assembly for the introduction into an exhaust gas pipe (2) and for the removal from the exhaust gas pipe (2), **characterized in that** the housing (14) features circumferentially centering elements (16) for centering the housing (14) in the exhaust gas pipe (2) which are designed as spring elements (16).

2. Filter assembly according to claim 1, **characterized in that** the housing (14) features a fixation unit, in particular a collar (17), for fixing the filter assembly (11) between a pipe section (3, 4) on the inlet side and on the outlet side of the exhaust gas pipe (2).

3. Filter assembly according to claim 1 or 2, **characterized in that** at least one axial seal (18) is attached to the housing (14), in particular to the collar (17).

4. Filter assembly according to one of the above claims, **characterized in that** the housing (14) features stops (15) at the end for installing the filter element (13) in axial direction (12).

5. Filter assembly according to one of the above claims, **characterized in that** a bearing mat (21) is attached circumferentially between the housing (14) and the ceramic filter element (13).

6. Exhaust gas after treatment device (1) for internal combustion engines, comprising: a filter assembly (11) according to one of the above claims, as well as an exhaust gas pipe (2) into which the filter assembly (13) is introduced, wherein the exhaust gas pipe (2) features a pipe section (3) on the inlet side and a pipe section (4) on the outlet side which are connected with each other via a detachable connection (8).

7. Exhaust gas after treatment device according to claim 6, **characterized in that** the pipe section (3) on the inlet side and the pipe section (4) on the outlet side feature flanges (5, 6) at the end which are detachably interconnected.

8. Exhaust gas after treatment device according to one of the claims 6 or 7, **characterized in that** the pipe section (3) on the inlet side or the pipe section (4) on the outlet side form a filter bowl into which the filter assembly (11) is introduced in axial direction.

9. Method for exhaust gas after treatment of internal combustion engines, by means of an exhaust gas after treatment device (1) according to one of the claims 6 to 8, comprising:
Filtering exhaust gases in a ceramic filter element (13) of a filter assembly (11) which is disposed in an exhaust gas pipe (2),
as well as removing the filter assembly (11) in case of used ceramic filter element (13) by detaching the connection between a pipe section (3, 4) on the inlet side and on the outlet side of the exhaust gas pipe (2).

10. Method according to claim 9, where the filter assembly (11) with the used ceramic filter element (13) is removed in axial direction from the exhaust gas pipe (2) and a filter assembly (11) with an unused ceramic filter element (13) or the filter assembly with the regenerated filter element (13) is introduced in axial direction (12) into the exhaust gas pipe (2).

## Revendications

1. Unité filtrante (11) pour le traitement ultérieur des gaz d'échappement des moteurs à combustion interne, notamment pour filtrer les particules des gaz d'échappement d'un moteur à combustion interne, comprenant un élément filtrant en céramique (13) notamment monolithique, l'unité filtrante (11) présentant un boîtier (14) dans lequel est introduit l'élément filtrant en céramique (13), et que l'unité filtrante (11) est exécutée en tant qu'unité de filtre interchangeable pour être introduite dans une conduite des gaz d'échappement (2) et pour être prélevée de la conduite des gaz d'échappement (2), **caractérisée en ce que** le boîtier (14) présente en sens circonférentiel des éléments de centrage (16) pour permettre le centrage du boîtier (14) dans la conduite des gaz d'échappement (2) et qui sont exécutés en tant qu'éléments de ressort (16).

2. Unité filtrante selon la revendication 1, **caractérisée en ce que** le boîtier (14) présente une unité de fixage, notamment un collet (17), pour fixer l'unité filtrante (11) entre une section de tube (3, 4) côté entrée et côté sortie de la conduite des gaz d'échappement (2).

3. Unité filtrante selon la revendication 1 ou 2, **caractérisée en ce qu'**au moins un joint axial (18) est monté sur le boîtier (14), notamment sur le collet (17).

4. Unité filtrante selon l'une des revendications précédentes, **caractérisée en ce que** le boîtier (14) présente à l'extrémité des butées (15) pour placer l'élément filtrant (13) en direction axiale (12).

5. Unité filtrante selon l'une des revendications précédentes, **caractérisée en ce qu'**une natte de support (21) est montée en sens circonférentiel entre le boîtier (14) et l'élément filtrant en céramique (13).

6. Dispositif de traitement ultérieur des gaz d'échappement (1) pour moteurs à combustion interne, comprenant: une unité filtrante (11) selon l'une des revendications précédentes, ainsi qu'une conduite des gaz d'échappement (2) dans laquelle est introduite l'unité filtrante (13), la conduite des gaz d'échappement (2) présentant une section de tube (3) côté entrée et une section de tube (4) côté sortie qui sont reliées l'une à l'autre par une liaison (8) amovible.

7. Dispositif de traitement ultérieur des gaz d'échappement selon la revendication 6, **caractérisé en ce que** la section de tube (3) côté entrée et la section de tube (4) côté sortie présentent à l'extrémité des flasques (5, 6).

8. Dispositif de traitement ultérieur des gaz d'échappement selon l'une des revendications 6 ou 7, **caractérisé en ce que** la section de tube (3) côté entrée ou la section de tube (4) côté sortie forment un pot de filtre dans lequel est introduite l'unité filtrante (11) en direction axiale.

9. Procédé de traitement ultérieur des gaz d'échappement pour moteurs à combustion interne, au moyen d'un dispositif de traitement ultérieur des gaz d'échappement (1) selon l'une des revendications 6 à 8, comprenant:
Filtrage des gaz d'échappement dans un élément filtrant en céramique (13) d'une unité filtrante (11) disposée dans une conduite des gaz d'échappement (2),
ainsi que prélèvement de l'unité filtrante (11) en cas d'élément filtrant en céramique (13) usé en débloquant une liaison entre une section de tube (3, 4) côté entrée et côté sortie d'une conduite des gaz d'échappement (2).

10. Procédé selon la revendication 9, dans lequel l'unité filtrante (11) est prélevée avec l'élément filtrant en céramique (13) usé en direction axiale de la conduite des gaz d'échappement (2) et dans lequel une unité filtrante (11) avec un élément filtrant en céramique (13) non-usé ou l'unité filtrante avec l'élément filtrant (13) régénéré est introduit en direction axiale (12) dans la conduite des gaz d'échappement (2).
